# EUROPEAN PATENT APPLICATION

(11) **EP 3 428 438 A1**
(43) Date of publication of application: **16.01.2019**
(21) Application number: 17181279.5
(22) Date of filing: 13.07.2017
(51) Int. Cl.: F02M 25/025, F01N 3/04, F02B 47/02, F01N 3/20

(54) **LIQUID CONTAINER WITH HEATING DEVICE**

(71) Applicant: Kautex Textron GmbH & Co. KG, 53229 Bonn (DE); ELTEK S.p.A., I-15033 Casale Monferrato (Alessandria) (IT)
(72) Inventor: HEIDEMEYER, Timm, 50679 Köln (DE); WOLF, Hartmut, 53639 Königswinter (DE); PIZZI, Marco, 10153 Torino (IT); BARBANO, Alberto, 15033 San Germano Monferrato / Alessandria (IT)
(74) Representative: Richly & Ritschel Patentanwälte PartG mbB

(57) **Abstract**

Liquid container for storing water,

- with a storage volume,
- with a swirl pot which is arranged within the storage volume, and
- with a heating device,
**characterized in that**
- a heating element of the heating device is at least partially integrated in a wall of the swirl pot.

## Description

The invention relates to a liquid container for storing water, in particular for a motor vehicle, with a storage volume, with a swirl pot which is arranged within the storage volume, and with a heating device.

In modern motor vehicles, aqueous operating liquids are used, for example, in order to increase the engine power or to reduce the emission of pollutants. For example, water injection systems for atomizing water in the intake tract of the engine or a direct supply into the combustion chamber are known. Furthermore, exhaust gas aftertreatment systems are known which are used to supply the exhaust gas flow with an aqueous urea solution in order to reduce pollutants.

Aqueous operating liquids can freeze at low external temperatures, and therefore the liquid is initially not available during cold starting of the engine. Rapid thawing of the frozen aqueous operating liquid is therefore required in order, for example, to ensure rapid operational readiness of a water injection system. The heat provided with a heating device for the thawing has to be introduced here uniformly into the frozen operating liquid within a short time.

In the case of flat heaters fitted in the liquid container from the outside or inside, there is the risk of thawed liquid being distributed in a flat manner in a bottom region, and being pushed away from a suction point by driving dynamics and not being able to be conveyed, for example, in corners, during acceleration or deceleration.

A further risk is the formation of cavities in the frozen operating liquid, which cavities may arise about an suction point due to local thawing and extraction. The heating mats which are now partially adjacent to air in the cavity and are therefore spaced apart from the frozen operating liquid can no longer reliably transmit heat to the frozen operating liquid in order to melt the latter.

Examples of flat heaters attached to an inner or outer wall are ohmic heating elements or heating mats. When flat ohmic heaters are used, a partial wetting of the heating element resulting from a low filling level of the liquid container may lead to damage due to overheating of the heating element, said partial wetting being able to be prevented only by means of a complicated closed-loop control taking temperature and time profiles into consideration. The use of a time model in the heater guide again extends the time until operational readiness.

Furthermore, fluid-operated heating circuits are known which are coupled, for example, to a cooling water circuit of an engine. A disadvantage here is that, in the case of the liquid containers which are frequently located in the rear part of a vehicle, very long lines are required, which lines have a negative influence on the system costs and may themselves have to be heated in order to ensure rapid system readiness, for example of a water injection system.

Furthermore, use can be made of ceramic PTC elements, what are referred to as "PTC blocks" in combination with heat conducting bodies as heating element. Said PTC blocks are adhesively bonded onto metallic heat conducting bodies, for example made of aluminium, in order to flatly distribute the locally very high heat density of the PTC blocks. The use of metal bodies for distributing heat has in turn disadvantages with regard to the structural design freedom and in respect of the system costs.

Against this background, the invention is based on the technical problem of specifying a liquid container for storing water, in particular for a motor vehicle, which liquid container does not have the above-described disadvantages or at least has them to a lesser extent and in particular has a cost-effective and reliable heating device.

The above-described technical problem is solved by a liquid container according to Claim 1. Further embodiments of the invention emerge from the dependent claims and the description below.

A liquid container for storing water, in particular for a motor vehicle, is specified, with a storage volume, in particular for storing a liquid like water or the like, with a swirl pot which is arranged within the storage volume, and with a heating device for heating the liquid, like water or the like. A heating element of the heating device is at least partially integrated in a wall of the swirl pot.

By means of the at least partial integration of the heating element into the wall, the heating element can be incorporated compactly into the swirl pot. In addition, an admission of heat into a secondary volume bounded by the swirl pot and into the storage volume surrounding the swirl pot can be achieved simultaneously by the heating device.

When a liquid is discussed here, it can be in particular water or an aqueous operating liquid for a motor vehicle, like urea solution for an scr-system or the like.

In order to protect the heating element from damage, the heating element, according to a further refinement of the liquid container, can be covered at least in sections by a plastic of the wall. On a side facing away from the wall, the heating element can have a free surface which is part of a wall of a secondary volume bounded by the swirl pot and is provided for direct contact with the liquid.

Alternatively, the heating element can be completely enclosed by a plastic of the wall. The integration of the heating element into the wall has the advantage that separately provided heating elements can be omitted.

According to a further refinement of the liquid container, it is provided that the heating device is a PTC heating device, wherein the heating element has a polymer which has a positive temperature coefficient, and wherein the heating device has electrodes which are connected to the polymer. The use of a PTC heating device has the advantage that, on account of the temperature behaviour of the polymer, a control-system for avoiding overheating can be omitted. Thus, even in the event of a low filling level of the swirl pot, damage of the heating device due to overheating can be avoided since, by means of the resistance of the polymer that rises sharply as the temperature increases, the PTC heating device is automatically switched off.

The polymer of the heating element can be heated in particular with the aid of the electrodes, wherein, for initiating a heating power, the electrodes can be coupled or are coupled to an electric energy source, in particular to a voltage source.

The polymer can be a material which is solid or pasty at room temperature.

The polymer can be a thermoplastic material.

The polymer can be a polyethylene (PE).

The polymer can contain additives which bring about or increase an electric conductivity of the polymer. For example, the polymer can have soot as an additive. The additive can be a non-metallic additive.

The heating element can consist of the polymer with a positive temperature coefficient.

The heating element can have one or more ceramic PTC elements, what are referred to as "PTC blocks", which can be entirely or partially embedded in the wall of the swirl pot. Said PTC blocks can sit on one or more metallic heat conducting bodies, for example made from aluminium, in order to flatly distribute the heat density, which is locally very high during the heating mode, of the PTC blocks. The metallic heat conducting bodies can likewise be entirely or partially embedded in the wall of the swirl pot.

According to a further refinement of the liquid container, it is provided that the electrodes are configured for initiating a current flow transversely with respect to a wall surface of the swirl pot. In particular, electrodes can be provided which are configured for initiating a current flow perpendicular to a wall surface of the swirl pot.

The electrodes can be configured for initiating a current flow along a wall surface of the swirl pot. In particular, electrodes can be provided which are configured for initiating a current flow parallel to a wall surface of the swirl pot.

The electrodes of the heating device can be linear.

The electrodes of the heating device can be plate shaped.

Linear electrodes or plate-shaped electrodes may be provided for the heating device being a first heating device. An additional second may have plate shaped electrodes or linear electrodes. The first heating device may be arranged within a side wall of the swirl pot wherein the second heating device may be arranged within a bottom wall of the swirl pot.

The electrodes can thus be dimensioned specifically to the use and adapted to a wall thickness of the swirl pot and/or to the volume to be heated.

In order to protect the electrodes against damage, the electrodes can be at least partially covered by a plastic of the wall.

According to a further refinement of the liquid container, a pump is provided for conveying the liquid out of the swirl pot, and a suction jet pump is additionally provided for circulating the liquid, wherein the pump is coupled to the suction jet pump in order to produce a propulsive jet of the suction jet pump. The suction jet pump brings about a circulation of heated liquid and thus accelerates thawing.

In particular, a return of the pump can be coupled to the suction jet pump, wherein the return is extended between a metering device supplied by the pump and the suction jet pump.

In order to bring out accelerated thawing of liquid within the swirl pot, the suction jet pump can be arranged within a secondary volume bounded by the swirl pot. Liquid can thus be delivered by the suction jet pump until the swirl pot overflows, in order to bring about thawing of the entire storage volume.

It can be provided that a suction line of the suction jet pump has an intake opening which is arranged in the storage volume outside a secondary volume bounded by the swirl pot, wherein the suction line is in particular heatable. The liquid can therefore be circulated throughout the entire storage volume.

The suction line may be guided close to the wall and the heating device of the swirl pot, so the suction line may at least partially also be heated by the heating device.

According to a further embodiment an intake opening of the suction jet pump being integrated within a wall or a bottom wall of the swirl pot. Thus, a compact or slim design is provided.

The intake opening can be arranged directly adjacent to the wall of the swirl pot. The intake opening can thus have, for example, a distance from an outer surface of the swirl pot, the distance being less than three times its diameter. The heating device of the swirl pot thereby also thaws liquid in a region of the storage volume that is adjacent to the intake opening.

Alternatively, the intake opening can have a distance to an outer surface of the swirl pot, said distance being more than three times its diameter, in particular more than ten times its diameter. In this case, the suction line can be designed to be heated in order to promote thawing of liquid to be conveyed in the region of the intake opening and to avoid freezing and clogging of the suction line.

Irrespective of the arrangement of the intake opening, it can be provided that the suction line is heated in order to accelerate thawing of frozen liquid in interaction with the heating device and to avoid freezing and clogging of the suction line.

All the lines carrying water may be heated according to certain embodiments of the invention.

In order to accelerate thawing of liquid to be conveyed, the suction jet pump can have a nozzle for distributing liquid. The nozzle can be configured for atomizing or extensively distributing the liquid conveyed by the suction jet pump.

The swirl pot can be inserted into a bottom-side wall of the liquid container.

The swirl pot can be inserted into a top-side wall of the liquid container.

The swirl pot can be bonded or welded to a bottom-side wall of the liquid container.

The swirl pot can be connected to a bottom-side or a top-side wall of the liquid container by mechanical connecting pieces.

Lines assigned to the swirl pot and/or to the heating device can be guided out of the liquid container into an environment via openings in a bottom of the swirl pot.

Alternatively or in addition, lines assigned to the swirl pot and/or to the heating device can be guided out of the liquid container into an environment via openings in a cover of the swirl pot.

Alternatively or in addition, lines assigned to the swirl pot and/or to the heating device can be guided out of the liquid container into an environment via openings of a cover inserted into a wall of the liquid container.

According to another embodiment the swirl pot may have an umbrella valve assigned to an intake opening. The umbrella valve allows filling of the swirl pot when the liquid container is filled with liquid for the first time. In addition, the umbrella valve ensures that swirl pot is not drained when there is no energy provided to a pump or the like.

The positioning and incorporation of the liquid container in a vehicle can be adapted to vehicle-specific boundary conditions for guidance of the lines.

The invention is described in more detail below with reference to a drawing illustrating exemplary embodiments. In the drawing, in each case schematically:
- Fig. 1: shows a liquid container according to the invention;
- Fig. 2: shows a heating device of the liquid container from Fig. 1;
- Fig. 3: shows a further heating device of the liquid container from Fig. 1;
- Fig. 4: shows a further liquid container according to the invention;
- Fig. 5: shows a further liquid container according to the invention.

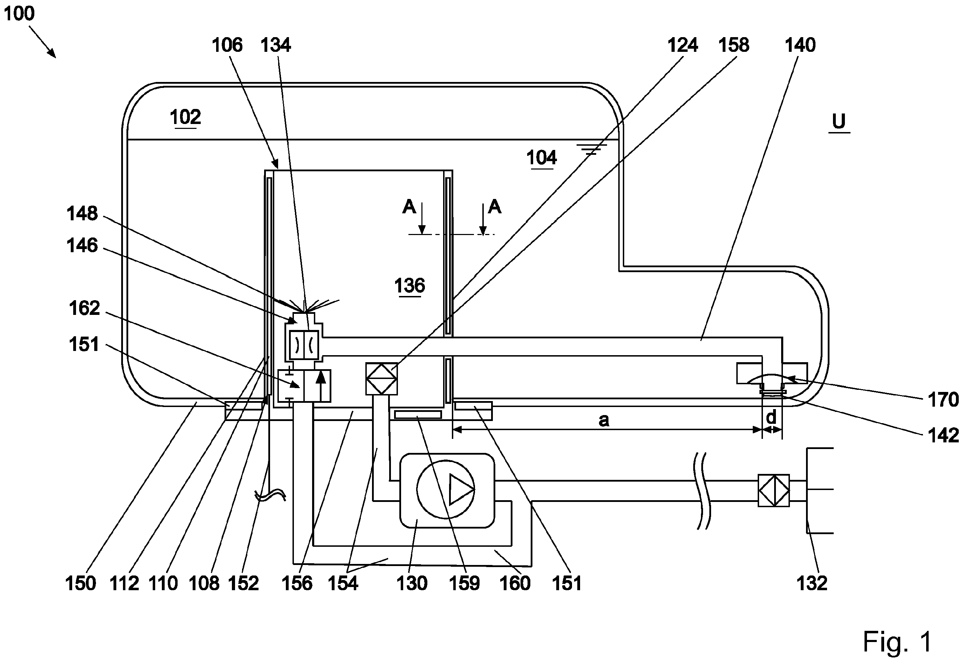

Fig. 1 shows a first exemplary embodiment of a liquid container 100 for a motor vehicle. The liquid container 100 has a storage volume 102 for storing a liquid 104. The liquid container 100 has a swirl pot 106 which is arranged within the storage volume 102. The liquid container 100 has a heating device 108 for heating the liquid 104.

A heating element 110 of the heating device 108 is at least partially integrated in a wall 112 of the swirl pot 106. In the present case, the heating element 110 is completely enclosed by a plastic 114 of the wall 112. Accordingly, the heating element 110 does not have any direct contact with the liquid 104.

In the present case, the heating device 108 is a PTC heating device 108. In the present case, the heating element 110 consists of a polymer 116, wherein the polymer 116 has a positive temperature coefficient. This means that the electrical resistance of the polymer 116 increases as the temperature rises.

The heating device 108 has electrodes 118, 120 which are connected to the polymer 116. In the present case, the polymer 116 is solid at room temperature. However, according to alternative refinements, it can be provided that the polymer is a material which is pasty at room temperature and is embedded in the wall 112.

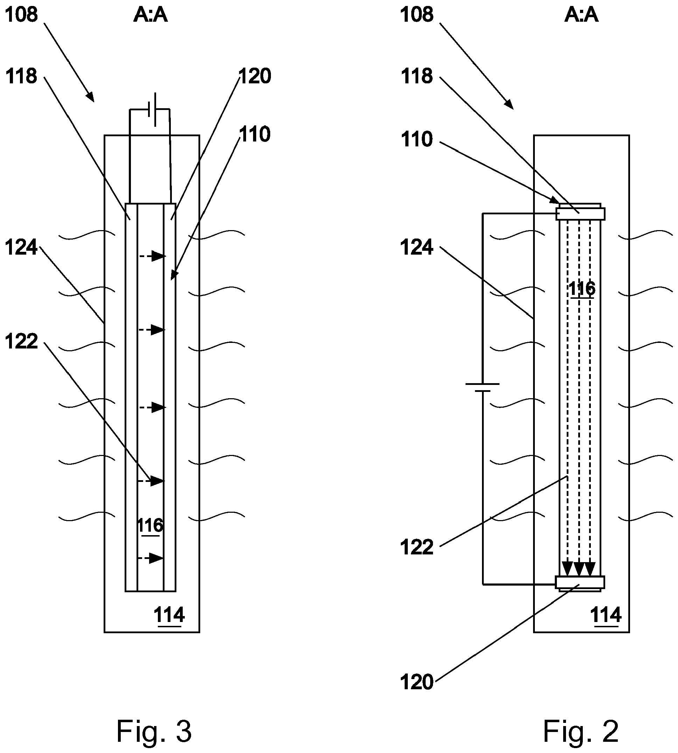

In the present case, the polymer 116 is mixed with additives in order to bring about or to increase the electrical conductivity of the polymer. According to Fig. 2, the electrodes 118, 120 are configured for initiating a current flow 122 along a wall surface 124 of the swirl pot 106. According to Fig. 2, the current flow 122 is oriented in particular parallel to the wall surface 124 of the swirl pot 106.

According to Fig. 3, the electrodes 118, 120 are configured for initiating the current flow 122 transversely with respect to the wall surface 124 of the swirl pot 106. According to Fig. 3, the current flow 122 is oriented in particular perpendicular to the wall surface 124 of the swirl pot 106.

As can be gathered from Fig. 3, the electrodes 118, 120 according to the variant of Fig. 3 are connected to polymer 116. The electrodes 118, 120 are metallic plates 118, 120 and ensure a flat distribution of the admission of energy.

Furthermore, a pump 130 is provided for conveying the liquid 104 out of the swirl pot 106 to a metering device 132. The metering device 132 is configured for atomizing and introducing the liquid 104, in the present case water 104, into an intake tract of an internal combustion engine.

In addition to the pump 130, a suction jet pump 134 is provided for circulating the liquid 104. The pump 130 is coupled to the suction jet pump 134 in order to produce a propulsive jet of the suction jet pump 134.

In the present case, the suction jet pump 134 is arranged within a secondary volume 136 bounded by the swirl pot 106. The swirl pot 106 is upwardly open, and therefore liquid 104 conveyed into the secondary volume 136 via the suction jet pump 134 can flow over the side walls 112 of the swirl pot 106 and can be conveyed into the storage volume 102 accommodating the swirl pot 106.

A suction line 140 of the suction jet pump 134 has an intake opening 142 which is arranged in the storage volume 102 outside the secondary volume 136 bounded by the swirl pot 106. The suction line 140 of the suction jet pump 134 is in the present case heatable. The intake opening 142 has a distance a to the outer surface 124 of the swirl pot 106, which distance corresponds to more than ten times a diameter d of the intake opening 142.

The suction jet pump 134 has a pump outlet 146 with a nozzle 148 for distributing liquid 104. In the present case, the swirl pot 106 is inserted into a bottom-side wall 150 of the liquid container 100.

A power line 152 connected to the heating device 108 and water lines 154 are guided into an environment U of the liquid container 100 via a bottom 156 of the swirl pot 106.
If the liquid 104 in the storage volume 102 and the secondary volume 136 is frozen in the event of appropriately low ambient temperatures, the liquid 104 first of all has to be thawed in order to convey the liquid 104 to the metering device 132.

In order to thaw the liquid 104, first of all the heating device 108 of the swirl pot 106 and the heated suction line 140 of the suction jet pump 134 are switched on. After part of the liquid 104 within the swirl pot 106 has been thawed, the pump 130 conveys liquid 104 out of the swirl pot 106 to the metering device 132 via a filter 158. The bottom 156 of the swirl pot 106 has a heating element 159 integrated in the above-described manner.

A volumetric flow of the liquid 104 that is not introduced into an intake tract of an internal combustion engine via the metering device 132 is guided past the pump 130 via a recirculation means 160, which is heated as well. The recirculation means 160 provides the propulsive jet for the suction jet pump 134. The pump 130 is therefore coupled to the suction jet pump 134 via the recirculation means 160 and conveys liquid 104 via a 'valve 162 to the suction jet pump 134 and to the nozzle 148.

Owing to the suction effect of the propulsive jet of the recirculation means 160, liquid 104 is conveyed out of the storage volume 102 into the suction line 140 of the suction jet pump 134 via the intake opening 142. The suction jet conveyed in this manner within the suction line 140 is discharged together with the propulsive jet via the nozzle 148 into the secondary volume 136 of the swirl pot 106.

A continuous circulation of thawed or heated liquid 104 therefore takes place until the swirl pot 106 overflows. By means of the continuous supply of liquid into the secondary volume 136, not only is the secondary volume 136 therefore thawed, but, if the swirl pot 106 overflows, the entire storage volume 102 is also continuously thawed.

The nozzle 148 is a distributing nozzle 148 which brings about a flat fanning out of the liquid 104 conveyed by the suction jet pump 134 in the region of the secondary volume 136.

An umbrella valve 170 is assigned to the intake opening 142. The swirl pot 106 is welded to bottom-side wall 150 of the liquid container 100 as indicated by the weld joint 151.

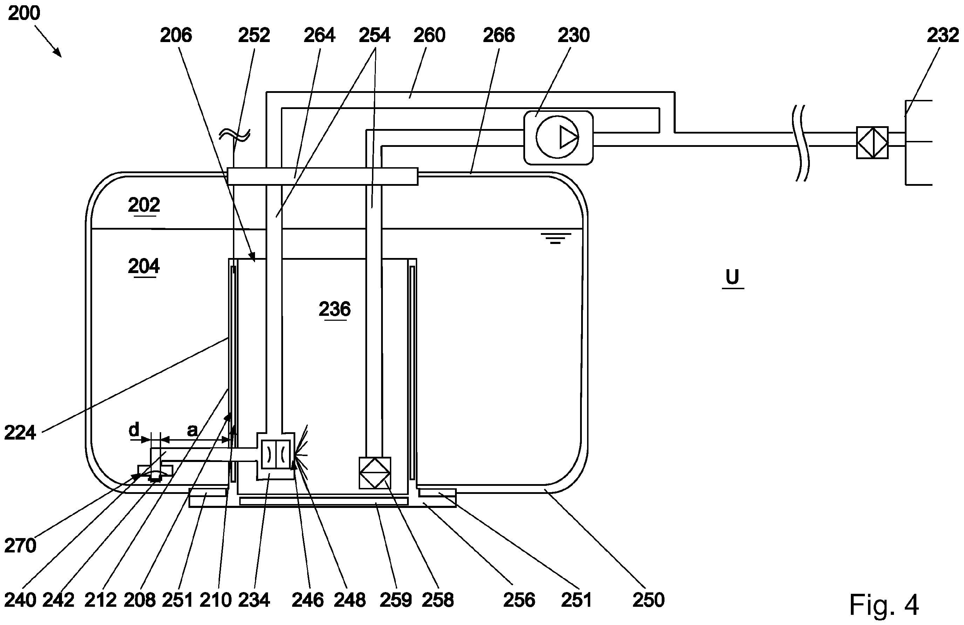

Fig. 4 shows a second exemplary embodiment of a liquid container 200 for a motor vehicle. The liquid container 200 has a storage volume 202 for storing a liquid 204. The liquid container 200 has a swirl pot 206 which is arranged in the storage volume 202. The liquid container 200 has a heating device 208 for heating the liquid 204. A heating element 210 of the heating device 208 is integrated in a wall 212 of the swirl pot 206 in an analogous manner to the first exemplary embodiment.

A pump 230 is provided for conveying the liquid 204 out of the swirl pot 206 to a metering device 232.

In addition to the pump 230, a suction jet pump 234 is provided for circulating the liquid 204. The pump 230 is coupled to the suction jet pump 234 in order to produce a propulsive jet of the suction jet pump 234.

The suction jet pump 234 is arranged within a secondary volume 236 bounded by the swirl pot 206. The swirl pot 206 is upwardly open, and therefore liquid 204 conveyed into the secondary volume 236 via the suction jet pump 234 can flow over side walls 212 of the swirl pot 206 and can be conveyed into the storage volume 202 accommodating the swirl pot 206.

A suction line 240 of the suction jet pump 234 has an intake opening 242 which is arranged in the storage volume 202 outside the secondary volume 236 bounded by the swirl pot 206.

According to this exemplary embodiment, the suction line 240 of the suction jet pump 234 is not heatable, but can be designed to be heatable in accordance with alternative refinements. The intake opening 242 has a distance a to an outer wall 224 of the swirl pot 206, which distance is less than three times the diameter d of the intake opening 242. The suction jet pump 234 has a pump outlet 246 with a nozzle 248 for distributing liquid 204. A bottom 256 of the swirl pot 206 has a heating element 259 integrated in the above-described manner.

A flexible power line 252 assigned to the heating device 208 and flexible water lines 254 are guided into an environment U of the liquid container 200 via a cover 264 inserted into a wall 266 of the liquid container 200.

If the liquid 204 in the storage volume 202 and the secondary volume 236 has frozen in the event of appropriately low ambient temperatures, the liquid 204 first of all has to be thawed in order to convey the liquid 204 to the metering device 232.

To thaw the liquid 204, first of all the heating device 208 of the swirl pot 206 is switched on. After part of the liquid 204 within the swirl pot 206 and also in a region which is adjacent to the swirl pot 206 and surrounds the intake opening 242 has thawed, the pump 230 conveys liquid 204 out of the swirl pot 206 to the metering device 232 via a filter 258.

A volumetric flow of the liquid 204, which volumetric flow is not discharged via the metering device 232, is guided past the pump 230 via a recirculation means 260. The recirculation means 260 provides the propulsive jet for the suction jet pump 234. The pump 230 is therefore coupled to the suction jet pump 234 via the recirculation means 260 and conveys liquid to the suction jet pump 234 and the nozzle 248.

Owing to the suction effect of the propulsive jet of the recirculation means 260, liquid 204 is conveyed out of the storage volume 202 via the intake opening 242 into the suction line 240 of the suction jet pump 234. The suction jet conveyed in this manner within the suction line 240 is discharged together with the propulsive jet via the nozzle 248 into the secondary volume 236 of the swirl pot 206. Thawed or heated liquid 204 is therefore continuously circulated until the swirl pot 206 overflows. By means of the continuous supply of liquid into the secondary volume 236, not only is the secondary volume 236 therefore thawed, but, if the swirl pot 206 overflows, the entire storage volume 202 is also continuously thawed. In the present case, the nozzle 248 is a distributing nozzle 248 which brings about a flat fanning out of the liquid 204 conveyed by the suction jet pump 234 in the region of the secondary volume 236.

An umbrella valve 270 is assigned to the intake opening 242.

The swirl pot 206 is welded to bottom-side wall 250 of the liquid container 100 as indicated by the weld joint 251.

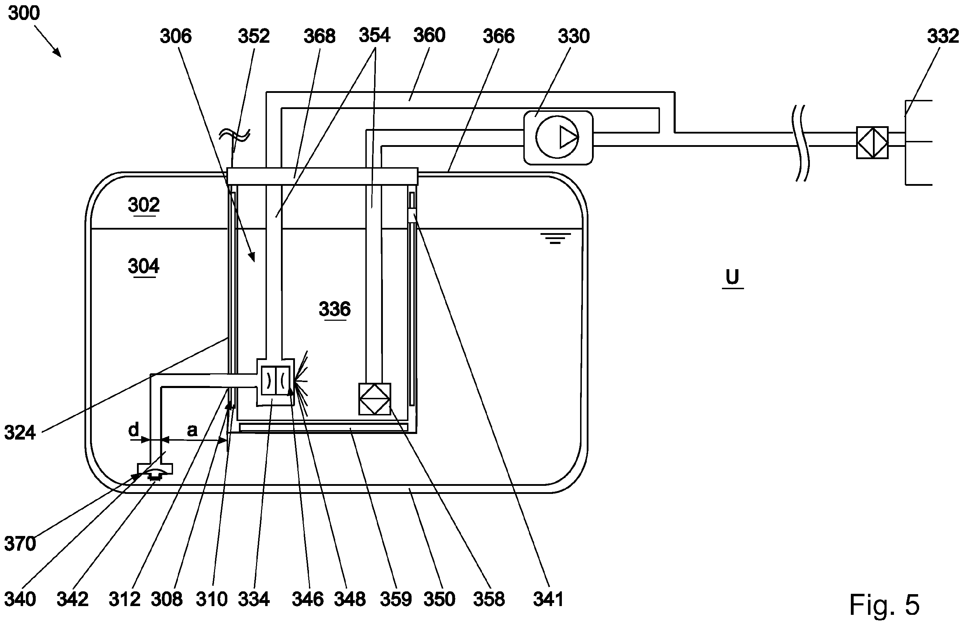

Fig. 5 illustrates a third exemplary embodiment of a liquid container 300. In the present case, a swirl pot 306 of the liquid container 300 is inserted into a top-side wall 366 of the liquid container 300. Lines 352, 354 are guided into an environment U of the liquid container 300 via a cover 368 closing the swirl pot 306.

The suction jet pump 334 is supplied in the manner described above with a propulsive jet via a pump 330. The swirl pot 306 has overflow openings 341 in order to transfer liquid 304 conveyed into the swirl pot out of the swirl pot 306 into a storage volume 302 and thereby to bring about a circulation of the liquid 304.

An umbrella valve 370 is assigned to the intake opening 342.

### Reference signs

- 100, 200, 300: liquid container
- 102, 202, 302: storage volume
- 104, 204, 304: liquid
- 106, 206, 306: swirl pot
- 108, 208, 308: heating device
- 110, 210, 310: heating element
- 112, 212, 312: wall
- 114: plastic
- 116: polymer
- 118: electrode
- 120: electrode
- 122: current flow
- 124, 224, 324: wall
- 130, 230, 330: pump
- 132, 232, 332: metering device
- 134, 234, 334: suction jet pump
- 136, 236, 336: secondary volume
- 140, 240, 340: suction line
- 341: overflow openings
- 142, 242, 342: intake opening
- 146, 246, 346: pump outlet
- 148, 248, 348: nozzle
- 150, 250, 350: bottom-side wall
- 151, 251: weld joint
- 152, 252, 352: power line
- 154, 254, 354: water line
- 156, 256, 356: bottom
- 158, 258, 358: filter
- 159, 259, 359: heating element
- 160, 260, 360: recirculation means
- 162, 262, 362: valve
- 264: cover
- 266: wall
- 368: cover
- 170, 270, 370: umbrella valve

## Claims

1. Liquid container for storing water,
- with a storage volume,
- with a swirl pot which is arranged within the storage volume, and
- with a heating device,
**characterized in that**
- a heating element of the heating device is at least partially integrated in a wall of the swirl pot.

2. Liquid container according to Claim 1,
**characterized in that**
- the heating element is covered at least in sections by a plastic of the wall,
or
- the heating element is completely enclosed by a plastic of the wall.

3. Liquid container according to either of Claims 1 or 2, **characterized in that**
- the heating device is a PTC heating device,
- wherein the heating element comprises a polymer which polymer has a positive temperature coefficient, and
- wherein the heating device has electrodes which are connected to the polymer.

4. Liquid container according to Claim 3,
**characterized in that**
- the electrodes are configured for initiating a current flow transversely with respect to a wall surface of the swirl pot,
or
- the electrodes are configured for initiating a current flow along a wall surface of the swirl pot.

5. Liquid container according to either of Claims 3 and 4, **characterized in that**
- the electrodes of the heating device are linear
or
- the electrodes of the heating device are plate-shaped.

6. Liquid container according to one of Claims 3 to 5, **characterized in that**
- the electrodes are at least partially covered by a plastic of the wall.

7. Liquid container according to one of Claims 1 to 6, **characterized in that**
- a pump is provided for conveying the water out of the swirl pot, and
- a suction jet pump is additionally provided for circulating the water,
- wherein the pump is coupled to the suction jet pump in order to produce a propulsive jet of the suction jet pump.

8. Liquid container according to Claim 7,
**characterized in that**
- the suction jet pump is arranged within a secondary volume bounded by the swirl pot.

9. Liquid container according to Claim 7 or Claim 8, **characterized in that**
- a suction line of the suction jet pump has an intake opening which is arranged in the storage volume outside a secondary volume bounded by the swirl pot, wherein the suction line is in particular heatable
or
- an intake opening of the suction jet pump being integrated within a wall or a bottom wall of the swirl pot.

10. Liquid container according to one of Claims 7 to 9, **characterized in that**
- the suction jet pump has a pump outlet with a nozzle for distributing water.

11. Liquid container according to one of Claims 1 to 10, **characterized in that**
- the swirl pot is inserted into a bottom-side wall of the liquid container,
or
- the swirl pot is inserted into a top-side wall of the liquid container.

12. Liquid container according to one of Claims 1 to 11, **characterized in that**
- lines assigned to the swirl pot and/or to the heating device are guided out of the liquid container into an environment via openings in a bottom of the swirl pot,
and/or
- lines assigned to the swirl pot and/or to the heating device are guided out of the liquid container into an environment via openings in a cover of the swirl pot,
and/or
- lines assigned to the swirl pot and/or to the heating device are guided out of the liquid container into an environment via openings of a cover inserted into a wall of the liquid container.

13. Liquid container according to one of Claims 1 to 12, **characterized in that**
- an umbrella valve is assigned to an intake opening.
